# EUROPÄISCHE PATENTSCHRIFT

(11) **EP 1 333 236 B1**
(45) Veröffentlichungstag und Bekanntmachung des Hinweises auf die Patenterteilung: **19.03.2008**
(21) Anmeldenummer: 02023720.2
(22) Anmeldetag: 23.10.2002
(51) Int. Cl.: F25B 49/02, H02P 1/44

(54) **Kühl- und/oder Gefriergerät**
Refrigerator and/or freezer apparatus
Appareil de refroidissement et/ou de congélation

(30) Priorität: 31.01.2002 DE 20201459 U; 04.04.2002 DE 20205224 U
(43) Veröffentlichungstag der Anmeldung: 06.08.2003
(73) Patentinhaber: Liebherr-Hausgeräte Ochsenhausen GmbH, 88416 Ochsenhausen (DE)
(72) Erfinder: Gerner, Herbert, 88416 Erlenmoos (DE); Ertel, Thomas, 88299 Leutkirch (DE)
(74) Vertreter: Gossel, Hans K.

(56) Entgegenhaltungen:
- EP-A- 0 442 848
- EP-A- 1 184 631
- US-A- 5 796 234
- US-B1- 6 185 946
- PATENT ABSTRACTS OF JAPAN vol. 011, no. 188 (M-599), 17. Juni 1987 (1987-06-17) -& JP 62 013950 A (DAIKIN IND LTD), 22. Januar 1987 (1987-01-22)
- PATENT ABSTRACTS OF JAPAN vol. 009, no. 098 (M-375), 27. April 1985 (1985-04-27) & JP 59 221546 A (TOSHIBA KK), 13. Dezember 1984 (1984-12-13)
- PATENT ABSTRACTS OF JAPAN vol. 2000, no. 18, 5. Juni 2001 (2001-06-05) & JP 01 057055 A (TOSHIBA CORP), 3. März 1989 (1989-03-03)

## Beschreibung

Die Erfindung betrifft ein Kühl- und/oder Gefriergerät mit zwei Kältekreisläufen, von denen jeder einen Verdampfer, einen Kondensator und einen Kompressor mit Kompressormotor besitzt, vorzugsweise Kombinationsgerät mit einem Kühlteil und einem Gefrierteil.

Kombinationsgeräte mit einem Kühlteil und einem Gefrierteil mit zwei Kompressoren haben den Vorteil, daß der Kühlteil und der Gefrierteil getrennt voneinander regelbar und auch abschaltbar sind. Um Energie zu sparen, ist es bei Kühl- und Gefriergeräten bekannt, drehzahlvariable Kompressormotore einzusetzen. Dies ist jedoch bei Kombinationsgeräten mit zwei Kompressormotoren aus konstruktiven und Kosten-Gründen unzweckmäßig.

Aufgabe der Erfindung ist es daher, die Vorteile von Kombinationsgeräten mit zwei Kompressoren und Kompressormotoren mit den Vorteilen von drehzahlgeregelten Kompressormotoren unter Einhaltung eines vertretbaren Kostenaufwands zu verbinden.

Erfindungsgemäß wird diese Aufgabe durch die Merkmale des Anspruchs 1 gelöst.

Einphasenasynchronmotore sind üblicherweise Kondensatormotore mit Kondensatorbeschaltung der Hilfsphase. Bei derartigen Motoren kann es sich um Motore mit Anlaufkondensator, Motore mit Betriebskondensator oder aber Doppelkondensatormotore handeln.

Bei Einphasenasynchronmotoren wird der nur für die Erzielung des Anlaufmoments benötigte Kondensator während des Nennbetriebs abgeschaltet. Als Anlaufvorrichtung ist ein PTC-Widerstand gebräuchlich. Beim Einschalten des Motors wird der Betriebskondensator durch den niederohmigen PTC-Widerstand zunächst kurzgeschlossen. Durch den Stromfluß wird der PTC-Widerstand erwärmt und sein Widerstandswert nimmt zu, d. h. er wird mit zunehmender Erwärmung hochohmig. Dadurch wird der Betriebskondensator wirksam.

Es sind auch Anlaßvorrichtungen bekannt, bei denen statt eines PTC-Widerstands eine die Anlaßbedingungen bewirkende elektronische Schaltung eingesetzt wird. Desweiteren sind Anlaufvorrichtungen mit Stromrelais und Drehzahlmessung bekannt.

Bei Einphasenasynchronmotoren mit Betriebskondensator wird der zur Erzielung des Anlaufmoments benötigte Kondensator auch während des Betriebs im Hilfsstrang belassen. Da der Betriebskondensator jedoch kleiner als der Anlaufkondensator zu dimensionieren ist, ist auch das erreichbare Anlaufmoment kleiner. Doppelkondensatormotore vereinigen durch die Kombination von Anlauf- und Betriebskondensator die Vorteile im Anlauf und im Nennbetrieb.

Zweckmäßigerweise sind die Kompressormotore Einphasenasynchronmotore mit einer Haupt- und Hilfswicklung und einem Betriebskondensator. Die Haupt- und Hilfswicklung können auch identisch ausgebildet sein.

Nach einer anderen Ausführungsform ist vorgesehen, daß die Kompressormotore mindestens eine Haupt- und eine Hilfswicklung aufweisen, denen phasenverschobene Wechselströme von zwei Ausgängen des variablen Frequenzumrichters zugeführt werden.

Bei den Kompressormotoren kann es sich auch um Dreiphasenasynchronmotore handeln, die parallel zueinander an die drei Phasen eines variablen Frequenzumrichters anschaltbar sind.

Schließlich können zusätzliche Schalter vorgesehen sein, durch die die Motore unter Umgehung des Frequenzumrichters unmittelbar an das Netz anschaltbar sind.

Ein Ausführungsbeispiel der Erfindung wird nachstehend anhand der Zeichnung näher erläutert. In dieser zeigt
- Fig. 1: die Anschaltung von zwei Einphasenasynchronmotoren parallel zueinander an einen variablen Frequenzumrichter oder das Netz in einem Prinzipschaltbild und
- Fig. 2: die Anschaltung von zwei Asynchronmotoren parallel zueinander an drei Ausgänge eines variablen Frequenzumrichters in einer Prinzipskizze.

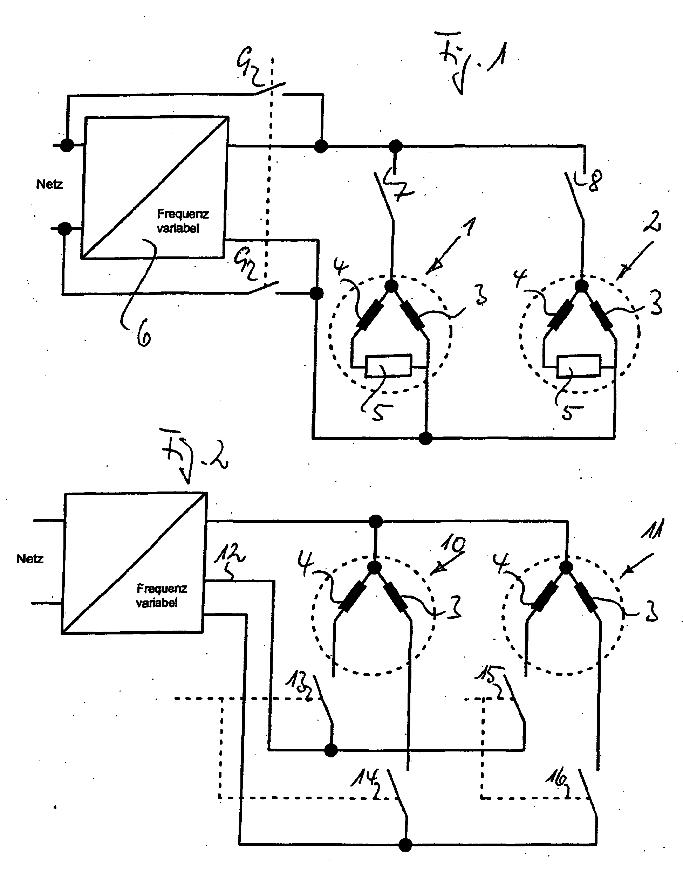

Aus Fig. 1 sind zwei Einphasenasynchronmotore 1, 2 mit einer Hauptwicklung 3, einer Hilfswicklung 4 und einer Anlaufvorrichtung 5 ersichtlich, die jeweils für sich allein oder gemeinsam parallel an den Frequenzumrichter 6 mit veränderbarer Frequenz oder aber auch unmittelbar an das Netz angeschaltet werden können.

Die Anlaufvorrichtung 5 besteht in üblicher Weise aus einer Parallelschaltung von Betriebskondensator und einem PTC-Widerstand (Widerstand mit positivem Temperaturkoeffizienten). Beim Einschalten des Motors wird der Betriebskondensator durch den niederohmigen PTC-Widerstand zunächst kurzgeschlossen. Durch den Stromfluß wird der PTC-Widerstand erwärmt und sein Widerstandswert nimmt somit zu, d. h. er wird mit zunehmender Erwärmung hochohmig. Dadurch wird der Betriebskondensator wirksam.

Der veränderbare Frequenzumrichter 6 weist zwei Ausgänge auf, von denen der Frequenzausgang ständig mit den einen Klemmen der Einphasenasynchronmotore 1, 2 verbunden ist. Die anderen Klemmen der Einphasenasynchronmotore 1, 2 können wahlweise über die Schalter 7, 8 an den zweiten Ausgang des Frequenzumrichters angeschaltet werden.

Zur unmittelbaren Anschaltung der beiden Motore 1, 2 einzeln oder parallel zueinander an das Netz ist zusätzlich ein den Frequenzumrichter überbrückender Schalter 9 vorgesehen.

Das Ausführungsbeispiel nach Fig. 2 unterscheidet sich von dem nach Fig. 1 dadurch, daß die Wicklungen 4 nicht über einen Betriebs- oder Anlaufkondensator, sondern durch einen besonderen dritten Ausgang 12 des variablen Frequenzumrichters mit einem phasenverschobenen Wechselstrom gespeist werden. Um die beiden Motore 10, 11 einzeln oder parallel zueinander an den variablen Frequenzumrichter anschalten zu können, sind die jeweils gleichzeitig öffnenden und schließenden Schalter 13, 14 und 15, 16 vorgesehen, durch die die Wicklungen der Motore an die beiden Frequenzausgänge des Frequenzumrichters angeschaltet werden können, während ein weiterer Ausgang des Frequenzumrichters ständig an die entsprechenden Klemmen der Motore 10, 11 angeschaltet ist.

## Patentansprüche

1. Kühl- und/oder Gefriergerät mit zwei Kältekreisläufen, von denen jeder einen Verdampfer, einen Kondensator und einen Kompressor mit Kompressormotor (1, 2; 10, 11) besitzt, vorzugsweise Kombinationsgerät mit einem Kühlteil und einem Gefrierteil,
**dadurch gekennzeichnet,**
**daß** die beiden Kompressormotore (1, 2; 10, 11) des Asynchrontyps durch Stellglieder (7, 8; 13 - 16), z. B. Relais, parallel zueinander an einen Frequenzumrichter (6) mit variabel einstellbarer Frequenz anschaltbar sind.

2. Kühl- und/oder Gefriergerät nach Anspruch 1, **dadurch gekennzeichnet, daß** die Kompressormotore (1, 2; 10, 11) Einphasenasynchronmotore mit jeweils zwei Wicklungen (3,4) und mit einer Anlaufvorrichtung (5) sind.

3. Kühl- und/oder Gefriergerät nach Anspruch 1 oder 2, **dadurch gekennzeichnet, daß** der Einphasenasynchronmotor (1, 2; 10, 11) mit einem Betriebskondensator (5) versehen ist.

4. Kühl- und/oder Gefriergerät nach Anspruch 1, **dadurch gekennzeichnet, daß** die Kompressormotore (1, 2; 10, 11) mindestens eine Haupt- und eine Hilfswicklung (3,4) aufweisen, die an die Phasenausgänge eines gemeinsamen Phasenumrichters (6) anschaltbar sind.

5. Kühl- und/oder Gefriergerät nach Anspruch 4, **dadurch gekennzeichnet, daß** die Haupt- und Hilfswicklung (3, 4) identisch ausgebildet sind.

6. Kühl- und/oder Gefriergerät nach Anspruch 1, **dadurch gekennzeichnet, daß** die Kompressormotore Dreiphasenasynchronmotore sind, die parallel an die drei Phasenausgänge eines gemeinsamen Phasenumrichters anschaltbar sind.

7. Kühl- und/oder Gefriergerät nach Anspruch 1, **dadurch gekennzeichnet, daß** Schalter vorgesehen sind, durch die die Motore (1, 2; 10, 11) unter Umgehung des Frequenzumrichters (6) einzeln oder parallel zueinander unmittelbar an das Netz anschaltbar sind.

## Claims

1. A refrigerator and/or freezer with two refrigeration circuits, each of which includes an evaporator, a condenser and a compressor with compressor motor (1, 2; 10, 11), preferably a combined appliance with a cooling part and a freezing part,
**characterized in**
**that** the two compressor motors (1, 2; 10, 11) of the asynchronous type can be connected parallel to each other to a frequency converter (6) with variably adjustable frequency by actuators (7, 8; 13-16), e.g. relays.

2. The refrigerator and/or freezer according to claim 1, **characterized in that** the compressor motors (1, 2; 10, 11) are single-phase asynchronous motors with two windings (3, 4) each and with one starting device (5).

3. The refrigerator and/or freezer according to claim 1 or 2, **characterized in that** the single-phase asynchronous motor (1, 2; 10, 11) is provided with an operational condenser (5).

4. The refrigerator and/or freezer according to claim 1, **characterized in that** the compressor motors (1, 2; 10, 11) have at least one main and one auxiliary winding (3, 4), which can be connected to the phase outputs of a common phase converter (6).

5. The refrigerator and/or freezer according to claim 4, **characterized in that** the main and auxiliary windings (3, 4) are formed identically.

6. The refrigerator and/or freezer according to claim 1, **characterized in that** the compressor motors are three-phase asynchronous motors, which can be connected in parallel to the three phase outputs of a common phase converter.

7. The refrigerator and/or freezer according to claim 1, **characterized in that** switches are provided, by means of which the motors (1, 2; 10, 11) can directly be connected to the network individually or parallel to each other by bypassing the frequency converter (6).

## Revendications

1. Appareil de refroidissement et/ou de congélation, dont chacun présente un évaporateur, un condensateur et un compresseur avec moteur de compresseur (1, 2; 10, 11), de préférence un appareil mixte avec une partie refroidissement et une partie congélation,
**caractérisé en ce que**
les deux moteurs de compresseur (1, 2; 10, 11) du type asynchrone peuvent être raccordés par des actionneurs (7, 8; 13 - 16), par exemple des relais, parallèlement entre eux à un convertisseur de fréquence (6) avec une fréquence réglable de façon variable.

2. Appareil de refroidissement et/ou de congélation selon la revendication 1, **caractérisé en ce que** les moteurs de compresseur (1, 2; 10, 11) sont des moteurs asynchrones monophasés comprenant chacun deux enroulements (3, 4) et un dispositif de démarrage (5).

3. Appareil de refroidissement et/ou de congélation selon la revendication 1 ou 2, **caractérisé en ce que** le moteur asynchrone monophasé (1, 2; 10, 11) est doté d'un condensateur d'exploitation (5).

4. Appareil de refroidissement et/ou de congélation selon la revendication 1, **caractérisé en ce que** les moteurs de compresseur (1, 2; 10, 11) présentent au moins un enroulement principal et un enroulement auxiliaire (3, 4), qui peuvent être raccordés aux sorties de phase d'un convertisseur de phase (6) commun.

5. Appareil de refroidissement et/ou de congélation selon la revendication 4, **caractérisé en ce que** l'enroulement principal et l'enroulement auxiliaire (3, 4) sont conçus identiques.

6. Appareil de refroidissement et/ou de congélation selon la revendication 1, **caractérisé en ce que** les moteurs de compresseur sont des moteurs asynchrones triphasés qui peuvent être raccordés parallèlement aux trois sorties de phase d'un convertisseur de phase commun.

7. Appareil de refroidissement et/ou de congélation selon la revendication 1, **caractérisé en ce qu'**il est prévu des interrupteurs par lesquels les moteurs (1, 2; 10, 11) peuvent être raccordés individuellement ou parallèlement entre eux directement au réseau en contournant le convertisseur de fréquence (6).
